# EUROPEAN PATENT APPLICATION

(11) **EP 1 973 366 A2**
(43) Date of publication of application: **24.09.2008**
(21) Application number: 08005481.0
(22) Date of filing: 25.03.2008
(51) Int. Cl.: H04Q 7/38

(54) **Method and apparatus for handling random access procedure in a wireless communications system**

(30) Priority: 21.03.2007 US 895987 P; 25.06.2007 US 945948 P
(71) Applicant: Innovative Sonic Limited, Tortola (VG)
(72) Inventor: Jen, Yu-Chih, Taipei City (TW)
(74) Representative: Görz, Ingo

(57) **Abstract**

A method for handling a random access procedure in a user equipment, called UE hereinafter, of a wireless communications system, the UE assigned a dedicated preamble for the random access procedure, the method includes deciding whether to reuse the dedicated preamble when the UE doesn't receive a downlink message successfully or the random access procedure is failed (302).

## Description

This application claims the benefit of U.S. Provisional Application No. 60/895,987, filed on 2007/3/21 and entitled "Method and Apparatus to improve LTE Random access procedure", and the benefit of U.S. Provisional Application No. 60/945,948, filed on June 25, 2007 and entitled "Method and Apparatus to optimize Random Access Procedure", the contents of which are incorporated herein by reference.

The present invention relates to a method and apparatus for handling packets in a wireless communications system according to the pre-characterizing clauses of claims 1, 6, 10, 13, 17, 23, 27, 30, 35, 36, 39, 40, 41, 42, 43, 44, 45, 46, 47 and 48.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. However, due to demand for high-speed and multimedia applications, the next generation mobile telecommunications technology and related communication protocols have been developed.

In the Long Term Evolution wireless communications system (LTE system), a Random Access Channel (RACH) is configured in an uplink (UL) channel between a user equipment (UE) and the network, and utilized for timing alignment, RNTI (Radio Network Temporary Identifier) assignment, and resource request. In the starting state, only downlink (DL) timing between UE and Node B (NB) is synchronized, and signals on RACH can be used for UL timing alignment. Before performing UL timing alignment, UE uses downlink Synchronization Channel or reference signals to perform synchronization on timing and frame. However, since signals may be delayed due to a distance between the transmitter and receiver, UE is not able to determine whether a message transmitted from UE is at a starting position of a receiving frame ofNB. In addition, when NB provides service for multiple UEs at the same time, Round Trip Delays (RTDs) between each UE and NB may be different due to different distances thereof, causing timing offset. Therefore, NB evaluates timing offset of a UE according to RACH signals from the UE, and notifies the UE to adjusting UL timing via Downlink Shared Channel (DL-SCH), to achieve timing synchronization. A RACH signal is composed of preambles used for UL timing synchronization and UE identity detection, or carrying short sinalling or signature.

On the other hand, RACH signals among different UEs are transmitted to NB by contention-based or non-contention-based method. That is, UE can select a RACH transmission opportunity and randomly select a preamble to transmit signals, or transmit a signal carrying a preamble assigned by the network (in such a situation, the RACH transmission opportunity is assigned by the network or selected by the UE). If the network cannot identify the transmitted RACH signal due to collision or low power, or if contention lost occurs due to a randomly-selected preamble, the UE can retransmit the RACH signal with larger power in the next available RACH transmission opportunity, until a response from the network is received or a condition is reached, e.g., maximum transmitting or maximum power.

For LTE, a RACH transmission opportunity is related to a time-frequency radio resource, not only related to time or frequency. Therefore, when RACH physical resource is selected, its time period and frequency band are determined. Of course, at certain time period, there may be more than one frequency sub-band for selection. On the other hand, preamble can be random access preamble, which is randomly selected by UE, or dedicated preamble, which is assigned by network (source cell or target cell). Basically, when UE uses (randomly selected) random access preamble, there is possibility another UE use the same preamble and transmit it in the same RACH opportunity so that network doesn't know whether the signal comes from one or more than one UE. Consequently, contention exists and will be solved after UE sends its UE identity in subsequent message 3. In contrary, dedicated preamble is assigned by network to a known specific UE so it's unique and won't cause contention between UEs (no another UE use the same dedicated preamble.)

In LTE, asynchronous RACH is concluded and adopted as working assumption where dedicated preamble and random access preamble based RACH accesses may both be supported. Random access procedure performance mainly in terms of latency and overhead is affected by collision/contention probability, time/frequency resources, number of user equipments (load), number of preamble signature, channel quality, UE identities, and even access causes and so on. On the other hand, the design requirements in addition to performance, such as short life span of identity usage, to be common for various kinds of non-synchronous RACH accesses in E-UTRAN (eNB and aGW) for FDD and TDD as well as irrespective of cell size, optimization for connected state UEs, are considered while possible reasons for UE to access on RACH can be categorized into four main causes, which are initial access (e.g. UE originated call, network originated call, tracking area update and initial cell access) including initial NAS signaling for NAS procedures (e.g. service request, network attach, routing/tracking area update), synchronization request, handover access and scheduling request. According to requirements and need of support for possible access causes, the baseline random access procedure model and channel mapping (between logical channels and transport channels) are defined in the prior art. Current decision on four steps of random access procedures is shown as following:
(1) Step "Random Access Preamble on RACH in uplink": is corresponding to a message 1, which carries 6 bits, and indicates a random ID, and possibly other information, e.g., cause or size, potentially with priority, pathloss or CQI to allocate UL resource appropriately.
(2) Step "Random Access Response on DL-SCH": is corresponding to a message 2, which is semi-synchronous (within a flexible window of which the size is one or more TTI) with message 1, no HARQ (Hybrid Automatic Repeat Request) support, transmitted on L1/L2 +DL-SCH, addressed to RA-RNTI (Random Access RNTI) on L1/L2 control channel, conveys at least RA-preamble identifier, timing alignment information, initial UL grant and assignment of Temporary Cell RNTI (T-CRNTI), and is intended for one or multiple UEs in one DL-SCH message.
(3) Step "First scheduled UL transmission on UL-SCH": is corresponding to a message 3, which uses HARQ, operates in RLC TM (Radio Link Control Transparent Mode) without segmentation, conveys at least UE identifier and (explicit or implicit) information on whether C-RNTI is already available. Besides, in case of initial access and if the size of the message allows it, the initial NAS message (or something allowing to build the initial NAS message in eNB) can be included, and size of the message is dynamic.
(4) Step "Contention Resolution on DL-SCH": is corresponding to a message 4, which is not synchronized with message 3, and addressed to the Temporary C-RNTI on L1/L2 control channel (at least for initial access). Besides, content of the message is FFS (for further study), HARQ is supported, and HARQ feedback is transmitted only by the UE which detects its own UE identity, as provided in message 3, echoed in the RRC (Radio Resource Control) Contention Resolution message.

In the prior art, at initial access, the four steps are: Random Access Preamble on RACH, Random Access Response via CCCH (Common Control Channel) on DL-SCH, RRC Connection Request via CCCH on UL-SCH, and RRC Contention Resolution via DCCH on DL-SCH.

Therefore, for LTE, the prior art provides steps of RA procedure. However, some problems may occur.

HARQ is not supported for message 2. Therefore, during random access procedure or RACH access if a UE with assignment of dedicated preamble doesn't successfully receive message 2 which might have been sent out by network, the dedicated preamble is wasted. It's not specified when/under what conditions the dedicated preamble for a UE should be withdrawn by network and how dedicated preamble shall be used efficiently even though it's critical. If the UE with dedicated preamble failed at random access response reception, it may reuse dedicated preamble for contention-less random access again or consider to use random access preamble if the UE assume the dedicated preamble is released (e.g. after several times of random access attempt). A standardized rule should be specified to avoid misunderstanding on usage and assignment of dedicated preamble between UE and network. Otherwise, a dedicated preamble may not be released or even increase the contention probability.

Network can pre-assign dedicated preamble to UE for synchronization request (e.g. when UE loses synchronization or when there is a UE originated call) or scheduling request. However, the dedicated preamble should be reserved and dynamically assigned to UE when only it's necessary. It's of course insufficient to provide non-contention based RA to a large number of connected state users (including UEs in long_DRX). On the other hand, to make the dedicated preamble assignment efficient, if a UE requires two different random access procedures or RACH access consecutively for different reasons (e.g. synchronization request and scheduling request), it's not efficient to waste time/radio resources at issuing a dedicate preamble (e.g. new or old one), especially while the dedicated preamble may be reused again /released later if two UEs are initiating random access procedure or RACH access of equal priority.

In LTE RACH access, the coexistence of dedicated preamble and random access preamble should be considered for certain circumstance, especially when available preambles are sufficient or concurrent procedures (e.g. time critical and non-time critical) are performed by a UE.

This in mind, the present invention aims at providing a method and apparatus of handling random access procedure in a wireless communications system, for implementing timing alignment and resource request, so as to enhance system efficiency.

This is achieved by a method and apparatus for handling random access procedure in a wireless communications system according to claims 1, 6, 10, 13, 17, 23, 27, 30, 35, 36, 39, 40, 41, 42, 43, 44, 45, 46, 47 and 48. The dependent claims pertain to corresponding further developments and improvements.

As will be seen more clearly from the detailed description following below, the claimed method for handling a random access procedure in a user equipment, called UE hereinafter, of a wireless communications system, in which the UE is assigned a dedicated preamble for the random access procedure, the method comprises deciding whether to reuse the dedicated preamble when the UE doesn't receive a downlink message successfully or the random access procedure is failed.

### Brief Description of the Drawings

Fig. 1 is a function block diagram of a wireless communications device.
Fig. 2 is a diagram of program code of Fig. 1.
Fig. 3 to Fig. 11 are flowcharts of processes according to embodiments of the present invention.
Fig. 12 is a schematic diagram of a wireless communications system.

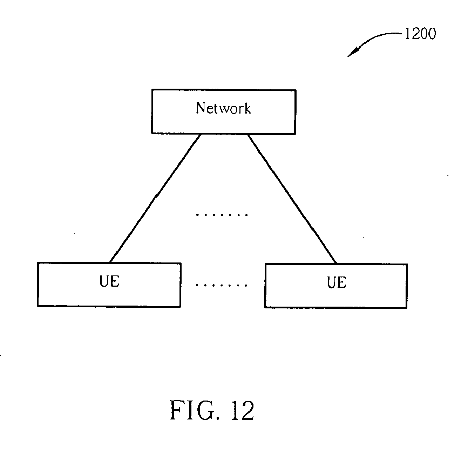

Please refer to Fig. 12, which illustrates a schematic diagram of a wireless communications system 1200. The wireless communications system 1200 is preferably an LTE system, and is briefly composed of a network and a plurality of UEs. In Fig. 12, the network and the UEs are simply utilized for illustrating the structure of the wireless communications system 1200. Practically, the network terminal may comprise a plurality of base stations (or Node B), radio network controllers and so on according to actual demands, and the UEs can be devices such as mobile phones, computer systems, etc.

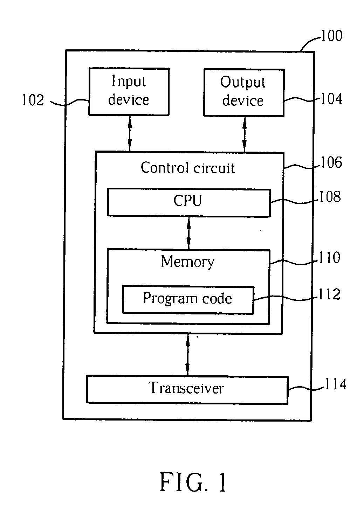

Please refer to Fig. 1, which is a functional block diagram of a communications device 100. The communications device 100 can be used for implementing the network and the UE shown in Fig. 12. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

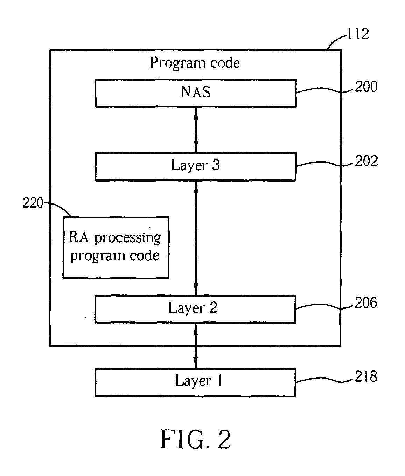

Please continue to refer to Fig. 2. Fig. 2 is a diagram of the program code 112 shown in Fig. 1. The program code 112 includes a Non Access Stratum (NAS) 200, a Layer 3 202, and a Layer 2 206, and is coupled to a Layer 1 218. The NAS 200 can generate NAS messages for realizing NAS applications. The Layer 3 202 is composed of an RRC layer, for performing radio resource control. The Layer 2 206 performs link control, and the Layer 1 218 performs physical connections. Whether a PDCP layer belongs to the Layer 3 202 or the Layer 2 206 is not relevant to this invention.

In order to achieve timing alignment and resource request, a RACH is configured in the communications device 100 for the random access procedure. In such a situation, the embodiment of the present invention provides a RA processing program code 220 for handling a random access procedure, so as to prevent the prior art problems. In the following, definitions of the messages 1, 2, 3, 4 are the same as what mentioned above. That is, the message 1 is corresponding to step "Random Access Preamble on RACH in uplink", the message 2 is corresponding to step "Random Access Response on DL-SCH", the message 3 is corresponding to step "First scheduled UL transmission on UL-SCH", and the message 4 is corresponding to step "Contention Resolution on DL-SCH."

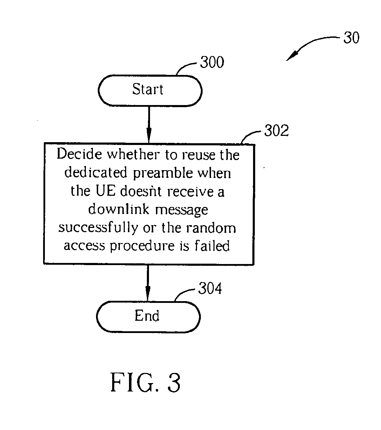

Please refer to Fig. 3, which illustrates a schematic diagram of a process 30 according an embodiment of the present invention. The process 30 is utilized for handling a random access procedure in a UE of the wireless communications system 1200, and can be, compiled into the RA processing program code 220. The process 30 comprises the following steps:
- Step 300:: Start.
- Step 302:: Decide whether to reuse the dedicated preamble when the UE doesn't receive a downlink message successfully or the random access procedure is failed.
- Step 304:: End.

According to the process 30, the embodiment of the present decides whether to reuse the dedicated preamble when the UE doesn't receive a downlink message successfully or the random access procedure is failed.

Preferably, deciding whether to reuse the dedicated preamble when the UE doesn't receive a downlink message successfully or the random access procedure is failed is deciding whether to reuse the dedicated preamble when the downlink message is not successfully received after an uplink message is sent. The uplink message is corresponding to a message 1 corresponding to a step "Random Access Preamble on RACH in uplink" or a message 3 corresponding to a step "First scheduled Uplink transmission on uplink shared channel". Deciding whether to reuse the dedicated preamble when the UE doesn't receive a downlink message successfully or the random access procedure is failed comprises reusing the dedicated preamble or asking for another dedicated preamble, or waiting for assignment of another dedicated preamble, or releasing the dedicated preamble and using a random access preamble according to a standardized rule or configuration.

Therefore, via the process 30, the embodiment of the present decides whether to reuse the dedicated preamble when the UE doesn't receive a downlink message successfully or the random access procedure is failed.

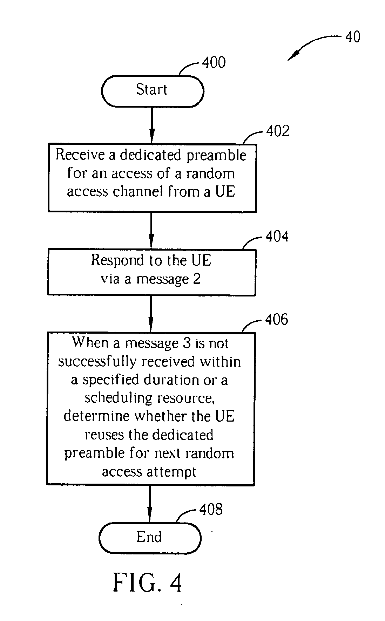

Please refer to Fig. 4, which illustrates a schematic diagram of a process 40 according an embodiment of the present invention. The process 40 is utilized for handling a random access procedure in a network of the wireless communications system 1200, and can be compiled into the RA processing program code 220. The process 40 comprises the following steps:
- Step 400:: Start.
- Step 402:: Receive a dedicated preamble for an access of a random access channel from a UE.
- Step 404:: Respond to the UE via a message 2.
- Step 406:: When a message 3 is not successfully received within a specified duration or a scheduling resource, determine whether the UE reuses the dedicated preamble for next random access attempt.
- Step 408:: End.

According to the process 40, after the network receives a dedicated preamble for an access of a random access channel from a UE, the network responds to the UE via a message 2, and when a message 3 is not successfully received within a specified duration or a scheduling resource, determine whether the UE reuses the dedicated preamble for next random access attempt.

Preferably, the message 3 is not received when the message 3 is not detected, or received, or is detected but not received within a specified duration or a scheduling resource. When determining whether the UE reuses the dedicated preamble for next random access attempt, the embodiment of the present invention is capable of withdrawing dedicated preamble assigned to the UE according to a standardized rule or configuration, or allowing the UE to reuse the dedicated preamble according to a standardized rule or configuration, or assigning another dedicated preamble.

Therefore, via the process 40, after the network receives a dedicated preamble for an access of a random access channel from a UE, the network responds to the UE via a message 2, and when a message 3 is not successfully received within a specified duration or a scheduling resource, determine whether the UE reuses the dedicated preamble for next random access attempt.

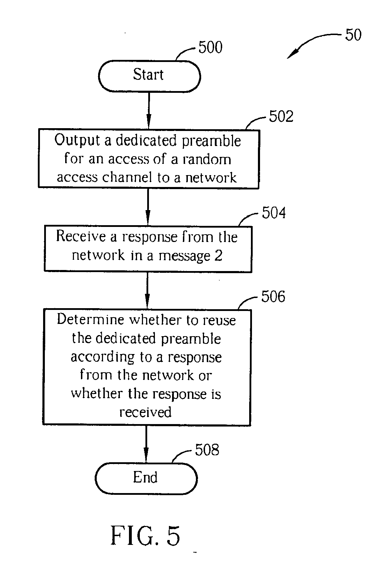

Please refer to Fig. 5, which illustrates a schematic diagram of a process 50 according an embodiment of the present invention. The process 50 is utilized for handling a random access procedure in a UE of the wireless communications system 1200, and can be compiled into the RA processing program code 220. The process 50 comprises the following steps:
- Step 500:: Start.
- Step 502:: Output a dedicated preamble for an access of a random access channel to a network.
- Step 504:: Receive a response from the network in a message 2.
- Step 506:: Determine whether to reuse the dedicated preamble according to a response from the network or whether the response is received.
- Step 508:: End.

According to the process 50, after the UE outputs a dedicated preamble for an access of a random access channel to a network, the UE receives a response from the network in a message 2, and then the UE determines whether to reuse the dedicated preamble according to a response from the network or whether the response is received.

Preferably, when the network does not successfully receive the message 3 and consider or try next random access attempt, the embodiment of the present is capable of asking for another dedicated preamble, or waiting for assignment of another dedicated preamble, or releasing the dedicated preamble according to a standardized rule or configuration.

Therefore, via the process 50, the UE determines whether to reuse the dedicated preamble according to a response from the network or whether the response is received.

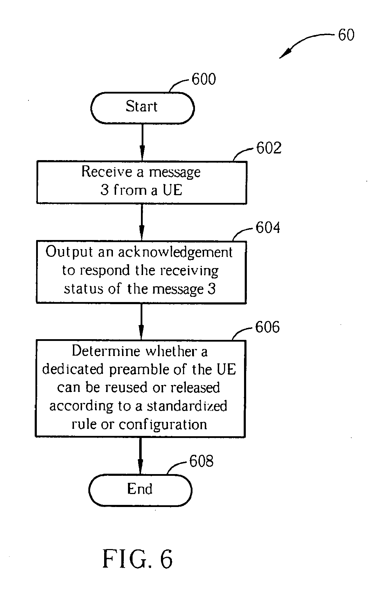

Please refer to Fig. 6, which illustrates a schematic diagram of a process 60 according an embodiment of the present invention. The process 60 is utilized for handling a random access procedure in a network of the wireless communications system 1200, and can be compiled into the RA processing program code 220. The process 60 comprises the following steps:
- Step 600:: Start.
- Step 602:: Receive a message 3 from a UE;
- Step 604:: Output an acknowledgement to respond the receiving status of the message 3.
- Step 606:: Determine whether a dedicated preamble of the UE can be reused or released according to a standardized rule or configuration.
- Step 608:: End.

According to the process 60, after the network receives a message 3 from a UE, the network outputs an acknowledgement to respond the receiving status of the message 3, and determines whether a dedicated preamble of the UE can be reused or released according to a standardized rule or configuration.

Preferably, the standardized rules or configuration specifies procedures, rules, handlings, decision under certain condition. The procedures, rules, handlings, decision under certain condition comprises determining whether a transmitted message 4 corresponding to a contention resolution step is a response of the message 3, whether the UE comprises another access of another random access channel for another random access procedure, whether to release or withdraw assignment of the dedicated preamble or allow to reuse the dedicated preamble after a message 4 responds to the message 3, whether a message 4 corresponding to a contention resolution step is successfully transmitted or retransmitted, or whether an access of another random access channel needs to use the dedicated preamble.

Therefore, via the process 60, after the network receives a message 3 from a UE, the network outputs an acknowledgement to respond the receiving status of the message 3, and determines whether a dedicated preamble of the UE can be reused or released according to a standardized rule or configuration.

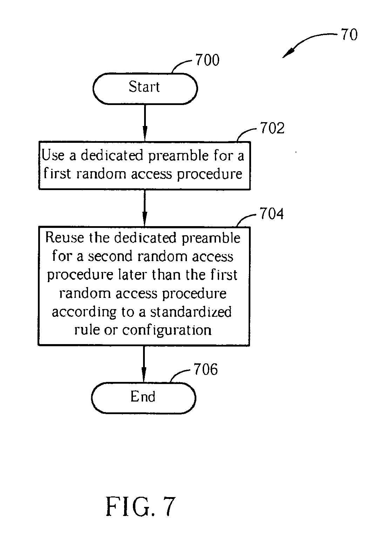

Please refer to Fig. 7, which illustrates a schematic diagram of a process 70 according an embodiment of the present invention. The process 70 is utilized for handling a random access procedure in a UE of the wireless communications system 1200, and can be compiled into the RA processing program code 220. The process 70 comprises the following steps:
- Step 700:: Start.
- Step 702:: Use a dedicated preamble for a first random access procedure.
- Step 704:: Reuse the dedicated preamble for a second random access procedure later than the first random access procedure according to a standardized rule or configuration.
- Step 706:: End.

According to the process 70, after the UE uses a dedicated preamble for a first random access procedure, the embodiment of the present invention can reuse the dedicated preamble for a second random access procedure later than the first random access procedure according to a standardized rule or configuration.

Preferably, the first random access procedure is synchronization request or handover procedure, while the second random access procedure is scheduling request, handover, synchronization request, radio link failure recovery, or a process indicating a network assigning the dedicated preamble about the reuse of the dedicated preamble. The standardized rules or configuration specifies procedures, rules, handlings, decision under certain condition comprises determining whether the first and second random access procedures are separated from each other within the certain duration, or whether the grant of resources for the first random access procedure is enough for the second random access procedure, whether there is the need of a dedicated preamble by another access of a random access channel with higher priority. The second random access procedure is required to use a dedicated preamble. The detection/initiation of the second random access procedure happens during or after the said first random access procedure

Therefore, via the process 70, after the UE uses a dedicated preamble for a first random access procedure, the embodiment of the present invention can reuse the dedicated preamble for a second random access procedure later than the first random access procedure according to a standardized rule or configuration.

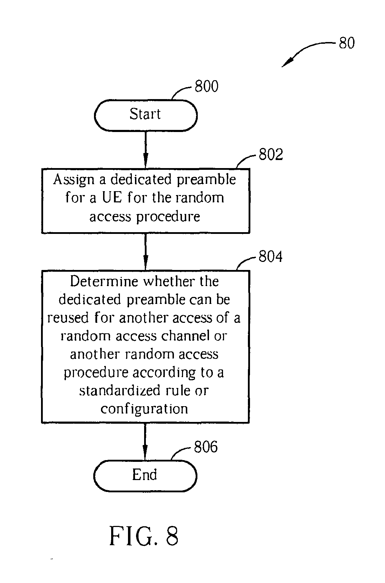

Please refer to Fig. 8, which illustrates a schematic diagram of a process 80 according an embodiment of the present invention. The process 80 is utilized for handling a random access procedure in a network of the wireless communications system 1200, and can be compiled into the RA processing program code 220. The process 80 comprises the following steps:
- Step 800:: Start.
- Step 802:: Assign a dedicated preamble for a UE for the random access procedure
- Step 804:: Determine whether the dedicated preamble can be reused for another access of a random access channel or another random access procedure according to a standardized rule or configuration.
- Step 806:: End.

According to the process 80, after assigning a dedicated preamble for a UE for the random access procedure, the network determines whether the dedicated preamble can be reused for another access of a random access channel or another random access procedure according to a standardized rule or configuration.

Preferably, the embodiment of the present invention is capable of indicating the UE whether to reuse the dedicated preamble when an access of another random access channel is expected, started, or confirmed, or an access of another random access procedure occurs. The access of another random access channel is triggered by a synchronization procedure due to network initiation or a handover procedure. Indicating the UE whether to reuse the dedicated preamble comprises indicating the UE whether to reuse the dedicated preamble, release the dedicated preamble or use a new dedicated preamble or random access preamble.

Therefore, via the process 80, after assigning a dedicated preamble for a UE for the random access procedure, the network determines whether the dedicated preamble can be reused for another access of a random access channel or another random access procedure according to a standardized rule or configuration.

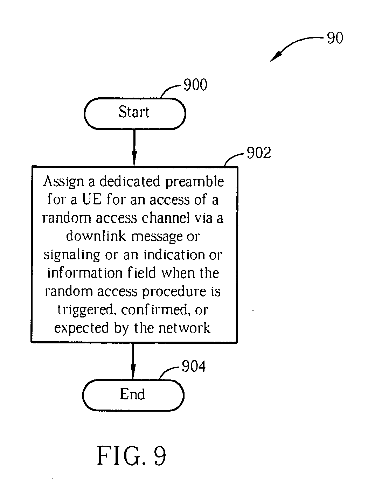

Please refer to Fig. 9, which illustrates a schematic diagram of a process 90 according an embodiment of the present invention. The process 90 is utilized for handling a random access procedure in a network of the wireless communications system 1200, and can be compiled into the RA processing program code 220. The process 90 comprises the following steps:
- Step 900:: Start.
- Step 902:: Assign a dedicated preamble for a UE for an access of a random access channel via a downlink message or signaling or an indication or information field when the random access procedure is triggered, confirmed, or expected by the network.
- Step 904:: End.

According to the process 90, the embodiment of the present invention assigns a dedicated preamble for a UE for an access of a random access channel via a downlink message or signaling or an indication or information field when the random access procedure is triggered, confirmed, or expected by the network.

Preferably, the random access procedure is a synchronization due to network originated call or handover access. The downlink message or signaling is RRC, MAC, or NAS message or signalling. The initial message or signaling is corresponding to control message or signal of a handover procedure, or corresponding to network originated call. The indication or information field is a flag to indicate that there is an assignment of a dedicated preamble, or an index to indicate which dedicated preamble is used in the pool, and/or a preamble field to indicate which dedicated preamble is.

Therefore, via the process 90, the embodiment of the present invention assigns a dedicated preamble for a UE for an access of a random access channel via a downlink message or signaling or an indication or information field when the random access procedure is triggered, confirmed, or expected by the network.

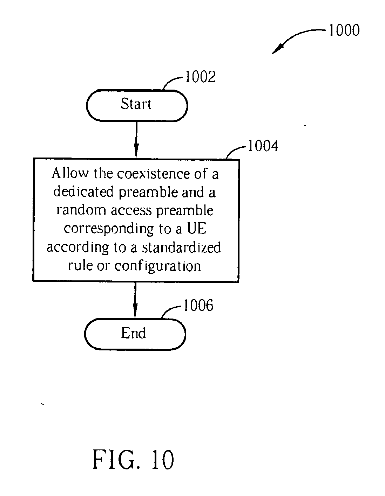

Please refer to Fig. 10, which illustrates a schematic diagram of a process 1000 according an embodiment of the present invention. The process 1000 is utilized for handling a random access procedure in a network of the wireless communications system 1200, and can be compiled into the RA processing program code 220. The process 1000 comprises the following steps:
- Step 1002:: Start.
- Step 1004:: Allow the coexistence of a dedicated preamble and a random access preamble corresponding to a UE according to a standardized rule or configuration.
- Step 1006:: End.

According to the process 1000, the network can allow the coexistence of a dedicated preamble and a random access preamble corresponding to a UE according to a standardized rule or configuration.

Therefore, via the process 1000, the network can allow the coexistence of a dedicated preamble and a random access preamble corresponding to a UE according to a standardized rule or configuration.

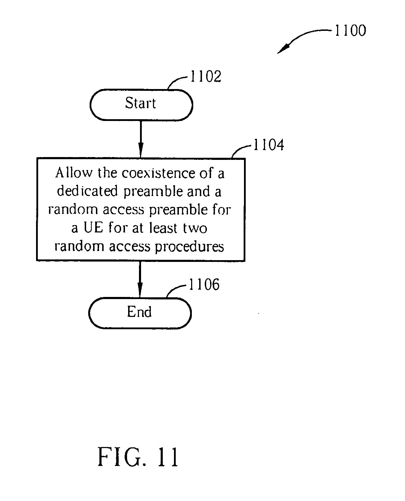

Please refer to Fig. 11, which illustrates a schematic diagram of a process 1100 according an embodiment of the present invention. The process 1100 is utilized for handling a random access procedure in a UE of the wireless communications system 1200, and can be compiled into the RA processing program code 220. The process 1100 comprises the following steps:
- Step 1102:: Start.
- Step 1104:: Allow the coexistence of a dedicated preamble and a random access preamble for a UE for at least two random access procedures.
- Step 1106:: End.

According to the process 1100, the UE allows the coexistence of a dedicated preamble and a random access preamble for a UE for at least two random access procedures.

Preferably, the UE is capable of deciding which preamble to be used for individual procedure according to access cause, priority, QoS of procedures, or which procedure holds dedicated preamble for less time. Time of the dedicated preamble held by the first random access procedure is shorter

Therefore, via the process 1100, the UE allows the coexistence of a dedicated preamble and a random access preamble for a UE for at least two random access procedures.

In summary, the embodiment of the present invention provides different operations of the random access procedure, to achieve timing alignment and resource request.

## Claims

1. A method for handling a random access procedure in a user equipment, called UE hereinafter, of a wireless communications system, the UE assigned a dedicated preamble for the random access procedure, the method comprising:
triggering the random access procedure;
**characterized by** deciding whether to reuse the dedicated preamble when the UE doesn't receive a downlink message successfully or the random access procedure is failed (302).

2. The method of claim 1, **characterized in that** the downlink message is a message 2 corresponding to a step "Random Access Response on DL-SCH", a message 4 corresponding to a step "Contention Resolution on DL-SCH", or a response of a message 3 corresponding to a step "First scheduled Uplink transmission on uplink shared channel".

3. The method of claim 1, **characterized in that** deciding whether to reuse the dedicated preamble when the UE doesn't receive a downlink message successfully or the random access procedure is failed is deciding whether to reuse the dedicated preamble when the downlink message is not successfully received after an uplink message is sent.

4. The method of claim 1, **characterized in that** the uplink message is corresponding to a message 1 corresponding to a step "Random Access Preamble on RACH in uplink" or a message 3 corresponding to a step "First scheduled Uplink transmission on uplink shared channel".

5. The method of claim 1, **characterized in that** deciding whether to reuse the dedicated preamble when the UE doesn't receive a downlink message successfully or the random access procedure is failed comprises reusing the dedicated preamble or asking for another dedicated preamble, or waiting for assignment of another dedicated preamble, or releasing the dedicated preamble and using a random access preamble according to a standardized rule or configuration.

6. A method for handling a random access procedure in a network of a wireless communications system comprising:
receiving a dedicated preamble for an access of a random access channel from a user equipment, called UE hereinafter (402);
responding to the UE via a message 2 (404);
**characterized by** when a message 3 is not successfully received within a specified duration or a scheduling resource, determining whether the UE reuses the dedicated preamble for next random access attempt (406).

7. The method of claim 6, **characterized in that** the message 3 is not received when the message 3 is not detected, or received, or is detected but not received within a specified duration or a scheduling resource.

8. The method of claim 6, **characterized in that** the message 3 is corresponding to a step "First scheduled Uplink transmission on uplink shared channel".

9. The method of claim 6, further comprising when determining whether the UE reuses the dedicated preamble for next random access attempt, withdrawing dedicated preamble assigned to the UE according to a standardized rule or configuration, or allowing the UE to reuse the dedicated preamble according to a standardized rule or configuration, or assigning another dedicated preamble.

10. A method for handling a random access procedure in a user equipment, called UE hereinafter, of a wireless communications system, the UE assigned a dedicated preamble for the random access procedure, the method comprising:
outputting a dedicated preamble for an access of a random access channel to a network (502);
receiving a response from the network in a message 2 (504); and
**characterized by** determining whether to reuse the dedicated preamble according to a response from the network or whether the response is received (506).

11. The method of claim 10, **characterized in that** the message 3 is corresponding to a step "First scheduled Uplink transmission on uplink shared channel".

12. The method of claim 10, further comprising when the network does not successfully receive the message 3 and consider or try next random access attempt, asking for another dedicated preamble, or waiting for assignment of another dedicated preamble, or releasing the dedicated preamble according to a standardized rule or configuration.

13. A method for handling a random access procedure in a network of a wireless communications system comprising:
receiving a message 3 from a user equipment, called UE hereinafter (602);
outputting an acknowledgement to respond the receiving status of the message 3 (604); and
**characterized by** determining whether a dedicated preamble of the UE can be reused or released according to a standardized rule or configuration (606).

14. The method of claim 13, **characterized in that** the message 3 is corresponding to a step "First scheduled Uplink transmission on uplink shared channel".

15. The method of claim 13, **characterized in that** the standardized rules or configuration specifies procedures, rules, handlings, decision under certain condition.

16. The method of claim 15, **characterized in that** the procedures, rules, handlings, decision under certain condition comprises determining whether a transmitted message 4 corresponding to a contention resolution step is a response of the message 3, whether the UE comprises another access of another random access channel for another random access procedure, whether to release or withdraw assignment of the dedicated preamble or allow to reuse the dedicated preamble after a message 4 responds to the message 3, whether a message 4 corresponding to a contention resolution step is successfully transmitted or retransmitted, or whether an access of another random access channel needs to use the dedicated preamble.

17. A method for handling a random access procedure in a user equipment, called UE hereinafter, of a wireless communications system comprising:
using a dedicated preamble for a first random access procedure (702); and
**characterized by** reusing the dedicated preamble for a second random access procedure later than the first random access procedure according to a standardized rule or configuration (704).

18. The method of claim 17, **characterized in that** the first random access procedure is synchronization request or handover procedure.

19. The method of claim 17, **characterized in that** the second random access procedure is scheduling request, handover, synchronization request, radio link failure recovery, or a process indicating a network assigning the dedicated preamble about the reuse of the dedicated preamble.

20. The method of claim 17, **characterized in that** the standardized rules or configuration specifies procedures, rules, handlings, decision under certain condition comprises determining whether the first and second random access procedures are separated from each other within the certain duration, or whether the grant of resources for the first random access procedure is enough for the second random access procedure, whether there is the need of a dedicated preamble by another access of a random access channel with higher priority.

21. The method of claim 17, **characterized in that** the second random access procedure is required to use a dedicated preamble.

22. The method of claim 17, **characterized in that** the detection or initiation of the second random access procedure happens during or after the said first random access procedure.

23. A method for handling a random access procedure in a network of a wireless communications system comprising:
assigning a dedicated preamble for a user equipment, called UE hereinafter, for the random access procedure (802);
**characterized by** determining whether the dedicated preamble can be reused for another access of a random access channel or another random access procedure according to a standardized rule or configuration (804).

24. The method of claim 23, further comprising indicating the UE whether to reuse the dedicated preamble when an access of another random access channel is expected, started, or confirmed, or an access of another random access procedure occurs.

25. The method of claim 24, **characterized in that** the access of another random access channel is triggered by a synchronization procedure due to network initiation or a handover procedure.

26. The method of claim 24, **characterized in that** indicating the UE whether to reuse the dedicated preamble comprises indicating the UE whether to reuse the dedicated preamble, release the dedicated preamble or use a new dedicated preamble or random access preamble.

27. A method for handling a random access procedure in a user equipment, called UE hereinafter, of a wireless communications system, the UE assigned a dedicated preamble for the random access procedure, the method comprising:
triggering the random access procedure;
**characterized by** using the dedicated preamble in an access of a random access channel according to configuration indicated by a control message from an upper layer.

28. The method of claim 27, **characterized in that** the upper layer indicates at least a lower layer to use the dedicated preamble according to configuration indicated by the control message.

29. The method of claim 27, **characterized in that** the configuration indicated by the control message is conveyed in an assignment signal or signaling of the dedicated preamble.

30. A method for handling a random access procedure in a network of a wireless communications system comprising:
triggering the random access procedure;
**characterized by** assigning a dedicated preamble for a user equipment, called UE hereinafter, for an access of a random access channel via a downlink message or signaling or an indication or information field when the random access procedure is triggered, confirmed, or expected by the network (902).

31. The method of claim 30, **characterized in that** the random access procedure is a synchronization due to network originated call or handover access.

32. The method of claim 30, **characterized in that** the downlink message or signaling is RRC, MAC, or NAS message or signaling.

33. The method of claim 30, **characterized in that** the initial message or signaling is corresponding to control message or signal of a handover procedure, or corresponding to network originated call.

34. The method of claim 30, **characterized in that** the indication or information field is a flag to indicate that there is an assignment of a dedicated preamble, or an index to indicate which dedicated preamble is used in the pool, and/or a preamble field to indicate which dedicated preamble is.

35. A method for handling a random access procedure in a network of a wireless communications system comprising:
triggering the random access procedure;
**characterized by** allowing the coexistence of a dedicated preamble and a random access preamble corresponding to a user equipment, called UE hereinafter, according to a standardized rule or configuration (1004).

36. A method for handling a random access procedure in a user equipment, called UE hereinafter, of a wireless communications system comprising:
triggering the random access procedure;
**characterized by** allowing the coexistence of a dedicated preamble and a random access preamble for a UE for at least two random access procedures (1104).

37. The method of claim 36 further comprising deciding which preamble to be used for individual procedure according to access cause, priority, QoS of procedures, or which procedure holds dedicated preamble for less time.

38. The method of claim 37, **characterized in that** time of the dedicated preamble held by the first random access procedure is shorter.

39. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
the communications device assigned a dedicated preamble for the random access procedure; and
**characterized by** deciding whether to reuse the dedicated preamble when the UE doesn't receive a downlink message successfully or the random access procedure is failed (302).

40. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
receiving a dedicated preamble for an access of a random access channel from a user equipment, called UE hereinafter (402);
responding to the UE via a message 2 (404); and
**characterized by** when a message 3 is not successfully received within a specified duration or a scheduling resource, determining whether the UE reuses the dedicated preamble for next random access attempt (406).

41. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
the communications device assigned a dedicated preamble for the random access procedure;
outputting a dedicated preamble for an access of a random access channel to a network (502);
receiving a response from the network in a message 2 (504); and
**characterized by** determining whether to reuse the dedicated preamble according to a response from the network or whether the response is received (506).

42. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
receiving a message 3 from a user equipment, called UE hereinafter (602);
outputting an acknowledgement to respond the receiving status of the message 3 (604); and
**characterized by** determining whether a dedicated preamble of the UE can be reused or released according to a standardized rule or configuration (606).

43. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
using a dedicated preamble for a first random access procedure (702); and
**characterized by** reusing the dedicated preamble for a second random access procedure later than the first random access procedure according to a standardized rule or configuration (704).

44. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
assigning a dedicated preamble for a user equipment, called UE hereinafter, for the random access procedure (802); and
**characterized by** determining whether the dedicated preamble can be reused for another access of a random access channel or another random access procedure according to a standardized rule or configuration (804).

45. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
the communications device assigned a dedicated preamble for the random access procedure; and
**characterized by** using the dedicated preamble in an access of a random access channel according to configuration indicated by a control message from an upper layer.

46. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
**characterized by** assigning a dedicated preamble for a user equipment, called UE hereinafter, for an access of a random access channel via a downlink message or signaling or an indication or information field when the random access procedure is triggered, confirmed, or expected by the network (902).

47. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
**characterized by** allowing the coexistence of a dedicated preamble and a random access preamble corresponding to a user equipment, called UE hereinafter, according to a standardized rule or configuration (1004).

48. A communications device (100) for accurately handling packets in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
**characterized by** allowing the coexistence of a dedicated preamble and a random access preamble for a UE for at least two random access procedures (1104).
